# EUROPEAN PATENT APPLICATION

(11) **EP 3 599 016 A1**
(43) Date of publication of application: **29.01.2020**
(21) Application number: 18185358.1
(22) Date of filing: 24.07.2018
(51) Int. Cl.: B01J 20/04, B01J 20/28, B01J 20/30, B01J 20/32, C02F 1/28, C02F 1/68, C02F 103/10, C02F 103/22, C02F 103/14, C02F 103/28, C02F 103/32, C02F 101/20, C02F 101/22

(54) **HEAVY METAL REMOVAL USING MINERALS BEING FUNCTIONALIZED WITH THIOLS**

(71) Applicant: Omya International AG, 4665 Oftringen (CH)
(72) Inventor: FTOUNI, Jamal, 4800 Zofingen (CH); KELLER, Tobias, 5043 Holziken (CH)
(74) Representative: Maiwald Patent- und Rechtsanwaltsgesellschaft mbH

(57) **Abstract**

The present invention relates to the use of a particulate mineral material being functionalized with one or more scavenging agents for scavenging and removing cationic metal ions from an aqueous medium. Furthermore, the present invention relates to a corresponding process for scavenging and removing cationic metal ions from an aqueous medium as well as to a functionalized particulate mineral material.

## Description

The present invention relates to the use of a particulate mineral material being functionalized with one or more scavenging agents for scavenging and removing cationic metal ions from an aqueous medium. Furthermore, the present invention relates to a corresponding process for scavenging and removing cationic metal ions from an aqueous medium as well as to a functionalized particulate mineral material.

Many industries discharge large amounts of metal-contaminated wastewater bearing heavy metals, such as Pb, Zn, Mn, Cd, Cr, Hg, Cu, Co, Mo and Ni. Because of their high solubility in aqueous mediums and since heavy metal ions are non-biodegradable, they can be absorbed by living organisms. Once they enter the food chain, large concentrations of heavy metals may accumulate in the human body. If the metals are ingested beyond the permitted concentration, they can cause serious health disorders. Serious health effects include reduced growth and development, cancer, organ damage, nervous system damage, and in extreme cases, death. Exposure to some metals, such as mercury and lead, may also cause development of autoimmunity, in which a person's immune system attacks its own cells. This can lead to joint diseases such as rheumatoid arthritis, and diseases of the kidneys, circulatory system, nervous system, and damaging of the fetal brain. At higher doses, heavy metals can cause irreversible brain damage. Another heavy metal, which deserves high attention is cadmium. Cd is employed in numerous industrial applications, mainly linked to the metallurgy industry and causes damages inter alia to the respiratory system, the kidneys and the skeletal system.

Wastewater streams containing heavy metals are produced from different industries. For example, electroplating and metal surface treatment processes generate significant quantities of wastewaters containing heavy metals. Other sources for metal wastes include the wood processing industry, where arsenic-containing wastes are produced, and the petroleum refining which generates conversion catalysts contaminated with chromium. All of these and other industries produce a large quantity of wastewaters and sludges that requires extensive waste treatment.

Wastewater regulations were established to minimize human and environmental exposure to hazardous chemicals. This includes limits on the types and concentration of heavy metals that may be present in the discharged wastewater. Therefore, it is necessary to remove or minimize the heavy metal ions in wastewater systematically by treating metal-contaminated wastewater prior to its discharge to the environment.

Principally, several methods for the heavy metal removal from a metal-contaminated aqueous medium are known in the art. The conventional processes for removing heavy metals from wastewater include e.g. chemical precipitation, flotation, adsorption, ion exchange and electrochemical deposition. Ion exchange is another method being used in the industry for the removal of heavy metals from waste water or sludges. Electrolytic recovery or electro-winning is another technology used to remove metals from process water streams. This process uses electricity to pass a current through an aqueous metal-bearing solution containing a cathode plate and an insoluble anode. Positively charged metallic ions cling to the negatively charged cathodes leaving behind a metal deposit that is strippable and recoverable.

Over the last years and decades, environmental regulations have become more and more stringent, requiring an improved quality of treated effluent. Therefore, many of the known methods may no longer be efficient enough or are too costly due to the technique or the materials employed for the removal below the required level.

Although, many functionalized materials are known in the art, these materials are often designed for other purposes or are used in other fields. Exemplarily, reference is made to EP 3 192 839 A1, which describes a process for the surface-treatment of a calcium carbonate-comprising material, which involves the adjustment of the pH-value of an aqueous suspension of at least one calcium carbonate-comprising material to a range from 7.5 to 12 and the addition of at least one surface-treatment agent to the aqueous suspension. Said surface-treatment agent is a silane compound as specified in EP 3 192 839 A1.

In view of the foregoing, there is an ongoing need for the development of new efficient treatment technologies, which allow for the treatment of wastewater containing heavy metals. In this context, the efficiency of the heavy metal removal is very important for the suitability of any new method. Obviously, also the costs for the application of any new technology are crucial. Thus, especially precipitation or adsorption techniques would be advantageous as no or only limited technical equipment is required for carrying out the respective process.

One or more of the foregoing and other problems are solved by the subject-matter as defined herein in the independent claims.

According to a first aspect, the present invention relates to the use of a particulate mineral material for scavenging and removing cationic metal ions from an aqueous medium. More precisely, according to the present invention a particulate mineral material being functionalized with one or more scavenging agents comprising a thiol-group is used for scavenging and removing cationic metal ions from an aqueous medium, wherein the particulate mineral material is selected from the group consisting of hydromagnesite, calcium carbonate containing material, brucite, magnesite, dolomite and mixtures of the foregoing and wherein the metal is selected from the group consisting of Pb, Zn, Mn, Cd, Cr, Hg, Cu, Co, Mo and Ni. The particulate mineral material has a specific surface area prior to functionalization with said one or more scavenging agents of 10 to 200 m²/g.

The inventors surprisingly found that it is possible to significantly improve the heavy metal absorbance efficiency of particulate mineral materials by specifically functionalizing or modifying the particulate mineral materials and especially the surface of said mineral material. The particulate mineral material to be used according to the present invention must have a specific surface area and is selected from the group consisting of hydromagnesite, calcium carbonate containing material, brucite, magnesite, dolomite and mixtures of the foregoing. Said surface according to the present invention is functionalized with one or more scavenging agents comprising a thiol(-SH)-group. This functionalization boosts the scavenging efficiency of the particulate mineral material and allows for scavenging and removing the absorbed or complexed metal(ions), which are selected from the group consisting of Pb, Zn, Mn, Cd, Cr, Hg, Cu, Co, Mo and Ni. The corresponding process of scavenging/complexing and removing the "loaded" particulate mineral material can be carried out in water, i.e. the one or more scavenging agents remain on the surface of said particulate mineral material in water, which renders the invention especially suitable for the treatment of all kinds of heavy metal containing aqueous mediums, like wastewater or sludges.

Preferred embodiments of the inventive use are defined herein in the dependent claims.

According to one embodiment of the invention, the one or more scavenging agents comprising a thiol-group additionally comprise an anchor group, preferably an anchor group selected from a carboxylic group, a carbonate group, a phosphate-group, a hydrogen-phosphate group and an organosilane-group, wherein the one or more scavenging agents more preferably are selected from compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3-mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.

According to one embodiment of the invention, the aqueous medium is selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents of the aforementioned dewatered sludges.

According to one embodiment of the invention, the functionalized particulate mineral material comprises the scavenging agent in an amount of 0.05 to 10 wt.-%, based on the dry weight of the particulate mineral material, preferably 0.1 to 5 wt.-% and more preferably 0.5 to 2.5 wt.-%.

According to one embodiment of the invention, the particulate mineral material is selected from hydromagnesite and calcium carbonate containing particulate material and mixtures of the foregoing, preferably from surface-reacted calcium carbonate (SRCC) and hydromagnesite and mixtures of the foregoing, and more preferably is surface-reacted calcium carbonate (SRCC).

According to one embodiment of the invention, the specific surface area of the particulate mineral material prior to functionalization with said one or more scavenging agents is more than 40 m²/g, preferably more than 50 m²/g and most preferably more than 60 m²/g.

According to one embodiment of the invention, the functionalization is achieved by immobilization of the one or more scavenging agents comprising a thiol-group through a bonding to the surface of the particulate mineral material via the anchor group.

Another aspect of the present invention relates to a process for scavenging and removing cationic metal ions from an aqueous medium comprising the steps:
a) Providing an aqueous medium containing one or more cationic metal ions selected from the group consisting of Pb, Zn, Mn, Cd, Cr, Hg, Cu, Co, Mo and Ni;
b) Functionalizing a particulate mineral material having a specific surface area of 10 to 200 m²/g with one or more scavenging agents comprising a thiol-group wherein the particulate mineral material is selected from the group consisting of hydromagnesite, calcium carbonate containing material, brucite, magnesite, dolomite and mixtures of the foregoing;
c) Adding the functionalized particulate mineral material of step b) to the aqueous medium for scavenging one or more of the cationic metal ions selected from the group consisting of Pb, Zn, Mn, Cd, Cr, Hg, Cu, Co, Mo and Ni;
d) Removing the functionalized particulate mineral material from the aqueous medium after step c). The foregoing inventive process allows for a very efficient and simple removal of the specified heavy metal cations from an aqueous medium. Preferred embodiments of the inventive process are herein defined in the dependent claims.

According to one embodiment of the inventive process, the pH-value of the aqueous medium is adjusted prior to the addition of the functionalized particulate mineral material to a value of 5 to 10, preferably, 6 to 9 and more preferably to 7 to 8.

According to one embodiment of the inventive process, during step c) one or more of the cationic metal ions selected from the group consisting of Pb, Zn, Mn, Cd, Cr, Hg, Cu, Co, Mo and Ni are bound to the thiol group of the scavenging agent.

According to one embodiment of the inventive process, the specific surface area of the particulate mineral material to be functionalized according to step b) with said one or more scavenging agents is more than 40 m²/g, preferably more than 50 m²/g and most preferably more than 60 m²/g.

According to one embodiment of the inventive process, the one or more scavenging agents comprising a thiol-group additionally comprise an anchor group, preferably an anchor group selected from a carboxylic group, a carbonate group, a phosphate-group, a hydrogen-phosphate group and an organosilane-group, wherein the one or more scavenging agents more preferably are selected from compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3-mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.

According to one embodiment of the inventive process, functionalization in step b) is achieved by contacting the particulate mineral material with the dissolved scavenging agent, wherein the solvent preferably is an organic solvent and more preferably is an alcohol.

According to one embodiment of the inventive process, the particulate mineral material is selected from hydromagnesite and calcium carbonate containing particulate material and mixtures of the foregoing, preferably from surface-reacted calcium carbonate (SRCC) and hydromagnesite and mixtures of the foregoing, and more preferably is surface-reacted calcium carbonate (SRCC).

A third aspect of the present invention refers to a functionalized particulate mineral material comprising at least one scavenging agent having a thiol-group and an anchor group, wherein the at least one scavenging agent covers at least partially the surface of the particulate mineral material and wherein the at least one scavenging agent is bound to the surface of the particulate mineral material via the anchor group, the anchor group being selected from a carboxylic group, a carbonate group, a phosphate-group, a hydrogen-phosphate group and an alkylsilane-group, and wherein the particulate mineral material has a specific surface area prior to functionalization with said at least one scavenging agent of 10 to 200 m²/g and is selected from the group consisting of hydromagnesite, calcium carbonate containing material, brucite, magnesite, dolomite and mixtures of the foregoing. The inventors surprisingly found that scavenging agents comprising a thiol-group for scavenging or complexing heavy-metal ions and comprising an anchor group selected from a carboxylic group, a carbonate group, a phosphate-group, a hydrogen-phosphate group and an organosilane-group are especially suitable for functionalizing the particulate mineral material, so that a very efficient removal of Pb, Zn, Mn, Cd, Cr, Hg, Cu, Co, Mo and Ni from an aqueous medium can be achieved. The anchor group being part of the scavenging agent allows for an easy and stable immobilization of the agent on the surface of the particulate mineral material. The particulate mineral material to be used according to the present invention must have the specific surface area in order to provide the desired efficiency. It is selected from the group consisting of hydromagnesite, calcium carbonate containing material, brucite, magnesite, dolomite and mixtures of the foregoing. The actual immobilization, i.e. the reaction of the at least one scavenging agent with the particulate mineral material can be achieved by treating the particulate mineral with a solution of the at least one scavenging agent. Preferred embodiments of the inventive functionalized particulate mineral material are herein defined in the dependent claims.

According to one embodiment of the invention, the particulate mineral material is selected from hydromagnesite and calcium carbonate containing particulate material and mixtures of the foregoing, preferably from surface-reacted calcium carbonate (SRCC) and hydromagnesite and mixtures of the foregoing, and more preferably is surface-reacted calcium carbonate (SRCC).

According to one embodiment of the invention, the specific surface area of the particulate mineral material to be functionalized according to step b) with said at least one scavenging agent is more than 40 m²/g, preferably more than 50 m²/g and most preferably more than 60 m²/g.

According to one embodiment of the invention, the functionalized particulate mineral material comprises the scavenging agent in an amount of 0.05 to 10 wt.-%, based on the dry weight of the particulate mineral material, preferably 0.1 to 5 wt.-% and more preferably 0.5 to 2.5 wt.-%.

According to one embodiment of the invention, said at least one scavenging agent is selected from compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3 -mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.

It should be understood that for the purposes of the present invention, the following terms have the following meanings:
The term "mineral material" in the meaning of the present invention refers to naturally occurring or synthetically produced substances that are solid under standard ambient temperature and pressure (SATP), i.e. at a temperature of 25°C and an absolute pressure of 100 kPa. The naturally occurring substances are inorganic and have a crystal structure or are amorphous. The mineral material according to the present invention is selected from the group consisting of hydromagnesite, calcium carbonate containing material, brucite, magnesite, dolomite and mixtures of the foregoing.

The term "particulate" in the meaning of the present document refers to materials composed of a plurality of particles. Said plurality of particles may be defined, for example, by its particle size distribution (*d*₉₈, *d*₅₀ etc.).

A "solution" as referred to herein is understood to be a single phase mixture of a specific solvent and a specific solute, for example a single phase mixture of a scavenging agent and water. The term "dissolved" as used herein thus refers to the physical state of a solute in a solution.

A "dry" material (e.g., dry calcium carbonate) may be defined by its total moisture content which, unless specified otherwise, is less than or equal to 5.0 wt.%, more preferably 1.0 wt.%, even more preferably less than or equal to 0.5 wt.%, even more preferably less than or equal to 0.2 wt.%, and most preferably between 0.03 and 0.07 wt.%, based on the total weight of the dried material.

Unless specified otherwise, the term "drying" refers to a process according to which water is removed from a material to be dried such that a constant weight of the obtained "dried" material at 120 °C is reached, wherein the mass (sample size 5 g) does not change more than 1 mg over a period of 30 s.

The term "ground natural calcium carbonate" (GNCC) or "ground calcium carbonate" (GCC) as used herein refers to a particulate material obtained from natural calcium carbonate-containing minerals (e.g. chalk, limestone, marble or dolomite) which has been processed in a wet and/or dry comminution step, such as crushing and/or grinding, and optionally has been subjected to further steps such as screening and/or fractionation, for example, by a cyclone or a classifier.

A "precipitated calcium carbonate" (PCC) in the meaning of the present invention is a synthesized material, obtained by precipitation following a reaction of carbon dioxide and calcium hydroxide (hydrated lime) in an aqueous environment. Alternatively, precipitated calcium carbonate can also be obtained by reacting calcium- and carbonate salts, for example calcium chloride and sodium carbonate, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

A "surface-reacted calcium carbonate" (SRCC) according to the present invention is a reaction product of ground calcium carbonate (GNCC)/(GCC) or precipitated calcium carbonate (PCC) treated with carbon dioxide and one or more H₃O⁺ ion donors, wherein the carbon dioxide is formed in situ by the H₃O⁺ ion donors treatment and/or is supplied from an external source. A H₃O⁺ ion donor in the context of the present invention is a Bronsted acid and/or an acid salt. Further details are set out hereinbelow. Surface-reacted calcium carbonate is a material and a term well-known in the art, which has been described in several earlier patent applications, such as WO 00/39222, US 2004/0020410, or WO 2010/037753.

The "particle size" of surface-reacted calcium carbonate herein is described as volume-based particle size distribution *d*ₓ(vol). Therein, the value *d*ₓ(vol) represents the diameter relative to which x % by volume of the particles have diameters less than *d*ₓ(vol). This means that, for example, the *d*₂₀(vol) value is the particle size at which 20 vol.% of all particles are smaller than that particle size. The *d*₅₀(vol) value is thus the volume median particle size, i.e. 50 vol.% of all particles are smaller than that particle size and the *d*₉₈(vol) value, referred to as volume-based top cut, is the particle size at which 98 vol.% of all particles are smaller than that particle size. The volume-based median particle size *d*₅₀(vol) and top cut *d*₉₈(vol) are evaluated using a Malvern Mastersizer 3000 Laser Diffraction System (Malvern Instruments Plc., Great Britain). The raw data obtained by the measurement is analyzed using the Mie theory, with a particle refractive index of 1.57 and an absorption index of 0.005//using the Fraunhofer theory. The methods and instruments are known to the skilled person and are commonly used to determine particle size distributions.

The "particle size" of particulate mineral materials other than surface-reacted calcium carbonate (e.g., GNCC or PCC) herein is described by its distribution of particle sizes *d*ₓ(wt). Therein, the value *d*ₓ(wt) represents the diameter relative to which x % by weight of the particles have diameters less than *d*ₓ(wt). This means that, for example, the *d*₂₀(wt) value is the particle size at which 20 wt.% of all particles are smaller than that particle size. The *d*₅₀(wt) value is thus the weight median particle size, i.e. 50 wt.% of all particles are smaller than that particle size and the *d*₉₈(wt) value, referred to as weight-based top cut, is the particle size at which 98 wt.% of all particles are smaller than that particle size. The weight-based median particle size *d*₅₀(wt) and top cut *d*₉₈(wt) are measured by the sedimentation method, which is an analysis of sedimentation behaviour in a gravimetric field. The measurement is made with a Sedigraph™ 5120 of Micromeritics Instrument Corporation, USA. The method and the instrument are known to the skilled person and are commonly used to determine particle size distributions. The measurement is carried out in an aqueous solution of 0.1 wt.% Na₄P₂O₇. The samples are dispersed using a high speed stirrer and sonication.

For the purpose of the present invention, pH shall be measured according to the measurement method defined in the examples section herein below.

Throughout the present document, the term "specific surface area" (in m²/g) refers to the specific surface area as determined by using the BET method (using nitrogen as adsorbing gas). Throughout the present document, the specific surface area (in m²/g) is determined by using the BET method (using nitrogen as adsorbing gas), which is well known to the skilled man (ISO 9277:2010). The total surface area (in m²) of the filler material is then obtained by multiplication of the specific surface area and the mass (in g) of the corresponding sample.

A "scavenging agent" in the meaning of the present invention is an agent which able to bind or complex metal ions, preferably in cationic form, via the thiol(-SH) functionality of the scavenging agent.

An "anchor group" in the meaning of the present invention is a functional group being selected from a carboxylic group (-COOH), a carbonate group, a phosphate-group, a hydrogen-phosphate group and an organosilane-group, which binds to the surface of the particulate mineral material, for example via an ionic bond or a covalent bond. "Organosilane groups" according to the present invention are chemical groups or moieties derived from silanes containing one or more organic groups. This includes alkoxysilane-groups. Organosilane groups specifically also may comprise 1 to 3 alkyl ether groups, preferably 3 alkyl ether groups, wherein the alkyl groups may be methyl or ethyl functions.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of' is considered to be a preferred embodiment of the term "comprising". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined hereinabove.

Terms like "obtainable" or "definable" and "obtained" or "defined" are used interchangeably. This, e.g., means that, unless the context clearly dictates otherwise, the term "obtained" does not mean to indicate that, e.g., an embodiment must be obtained by, e.g., the sequence of steps following the term "obtained" though such a limited understanding is always included by the terms "obtained" or "defined" as a preferred embodiment.

When in the following preferred embodiments of the inventive use will be discussed in more detail, it is to be understood that these details and embodiments also apply to the inventive process and vice versa. The same applies to the preferred embodiments described for the inventive particulate mineral material. It is to be understood that these details and embodiments also apply to the inventive use and/or process and vice versa.

According to the inventive use and the process according to the present invention, a particulate mineral material has to be functionalized with one or more scavenging agents. The particulate mineral material to be used according to the present invention has a specific surface area of from 10 to 200 m²/g. In a preferred embodiment, the particulate mineral material has a specific surface area of from 15 to 200 m²/g, preferably from 27 to 180 m²/g, more preferably from 30 to 160 m²/g, even more preferably from 45 to 150 m²/g, and most preferably from 48 to 140 m²/g, as measured using nitrogen and the BET method according to ISO 9277:2010. It is especially preferred that according to the present invention high surface particulate mineral materials are used. A "high surface" mineral material according to the present invention is especially preferred and has prior to functionalization with said one or more scavenging agents a specific surface area of more than 40 m²/g. Preferably, the specific surface area of the particulate mineral material is more than 50 m²/g and most preferably more than 60 m²/g.

Suitable particulate mineral materials according to the present invention include hydromagnesite, calcium carbonate containing material, brucite, magnesite, dolomite and mixtures of the foregoing. According to the present invention it is preferred that the particulate mineral material is selected from hydromagnesite and calcium carbonate containing particulate materials and mixtures of the foregoing, preferably from surface-reacted calcium carbonate (SRCC) and hydromagnesite and mixtures of the foregoing, and preferably is surface-reacted calcium carbonate (SRCC).

Hydromagnesite or basic magnesium carbonate, which is the standard industrial name for hydromagnesite, is a naturally occurring mineral, which is found in magnesium rich minerals such as serpentine and altered magnesium rich igneous rocks, but also as an alteration product of brucite in periclase marbles. Hydromagnesite is described as having the following formula Mg₅(CO₃)₄(OH)₂ . 4H₂O. It should be appreciated that hydromagnesite is a very specific mineral form of magnesium carbonate and occurs naturally as small needle-like crystals or crusts of acicular or bladed crystals. In addition thereto, it should be noted that hydromagnesite is a distinct and unique form of magnesium carbonate and is chemically, physically and structurally different from other forms of magnesium carbonate. Hydromagnesite can readily be distinguished from other magnesium carbonates by x-ray diffraction analysis, thermogravimetric analysis or elemental analysis. Besides the natural hydromagnesite, synthetic hydromagnesites (or precipitated magnesium carbonates) can be prepared. For instance, US 1,361,324, US 935,418, GB 548,197 and GB 544,907 generally describe the formation of aqueous solutions of magnesium bicarbonate (typically described as "Mg(HCO₃)₂"), which is then transformed by the action of a base, e.g., magnesium hydroxide, to form hydromagnesite. Hydromagnesite according to the present invention may have an average particle size *d₅₀* of less than 20 µm, preferably of less than 15 µm and more preferably of less than 10 µm.

Calcium carbonate containing materials according to the present invention include ground calcium carbonate (GCC)/(GNCC), synthetic precipitated calcium carbonate (PCC) and surface-reacted calcium carbonate (SRCC) and mixtures of the foregoing materials. According to the present invention, PCC and SRCC are especially preferred due to their usually higher specific surface area. As set out above, the calcium carbonate containing material preferably has prior to functionalization with said one or more scavenging agents a specific surface area of more than 40 m²/g, more preferably of more than 50 m²/g and most preferably of more than 60, 70, 80 or 90 m²/g.

The natural or precipitated calcium carbonate according to the present invention may be in form of particles having a weight median particle size *d*₅₀(wt) of from 0.05 to 10.0 µm, preferably from 0.2 to 5.0 µm, more preferably from 0.4 to 3.0 µm, most preferably from 0.6 to 1.2 µm, and especially 0.7 µm. According to a further embodiment of the present invention, the natural or precipitated calcium carbonate is in form of particles having a top cut particle size *d*₉₈(wt) of from 0.15 to 55 µm, preferably from 1 to 40 µm, more preferably from 2 to 25 µm, most preferably from 3 to 15 µm, and especially 4 µm.

The natural or precipitated calcium carbonate represents the starting material for preparing the surface-reacted calcium carbonate (SRCC). More precisely, the reaction of natural or synthetic calcium carbonate with an acid knowingly results in the formation of an insoluble, at least partially crystalline salt of an anion of the acid on the surface of the natural or synthetic calcium carbonate. Depending on the employed acid, insoluble calcium salts including anions such as sulphate, phosphate, citrate, or oxalate can be formed. In other words, the chemical nature of the natural or synthetic calcium carbonate source material is changed by the reaction with the at least one acid and the carbon dioxide. The presence of the formed insoluble calcium salts can be detected by methods known to the skilled person, for example, by X-ray diffraction measurements (XRD). Therefore, the surface-reacted calcium carbonate can be clearly distinguished from conventional calcium carbonate such as natural or synthetic calcium carbonate based on the material composition. Furthermore, due to the reaction of the natural or synthetic calcium carbonate with the at least one acid, the shape and surface structure of the natural or synthetic calcium carbonate are significantly changed.

In the following, further details relating to the manufacture and the nature of SRCC are provided:
It is appreciated that the surface-reacted calcium carbonate can be one or a mixture of different kinds of surface-reacted calcium carbonate(s). In one embodiment of the present invention, the surface-reacted calcium carbonate comprises, preferably consists of, one kind of surface-reacted calcium carbonate. Alternatively, the surface-reacted calcium carbonate comprises, preferably consists of, two or more kinds of surface-reacted calcium carbonates. For example, the surface-reacted calcium carbonate comprises, preferably consists of, two or three kinds of surface-reacted calcium carbonates. Preferably, the surface-reacted calcium carbonate comprises, more preferably consists of, one kind of surface-reacted calcium carbonate.

The surface-reacted calcium carbonate is a reaction product of ground natural calcium carbonate (GNCC)/(GCC) or precipitated calcium carbonate (PCC) treated with carbon dioxide and one or more H₃O⁺ ion donors, wherein the carbon dioxide is formed in situ by the H₃O⁺ ion donors treatment and/or is supplied from an external source. Because of the reaction of ground natural calcium carbonate or precipitated calcium carbonate with carbon dioxide and the one or more H₃O⁺ ion donors, surface-reacted calcium carbonate may comprise GCC/GNCC or PCC and at least one water-insoluble calcium salt other than calcium carbonate.

In a preferred embodiment, said surface-reacted calcium carbonate comprises GCC/GNCC or PCC and at least one water-insoluble calcium salt other than calcium carbonate which is present on at least part of the surface of said GCC/GNCC or PCC.

An H₃O⁺ ion donor in the context of the present invention is a Bronsted acid and/or an acid salt.

The surface-reacted calcium carbonate may be obtained by a process comprising the steps of:
(a) providing a suspension of ground natural calcium carbonate (GNCC) or precipitated calcium carbonate (PCC);
(b) adding at least one acid having a pKₐ value of 0 or less at 20 °C, or having a pKₐ value from 0 to 2.5 at 20 °C to the suspension provided in step (a); and
(c) treating the suspension provided in step (a) with carbon dioxide before, during or after step (b).

Alternatively, the surface-reacted calcium carbonate may be obtained by a process comprising the steps of:
(a) providing a ground natural calcium carbonate (GNCC) or precipitated calcium carbonate (PCC);
(b) providing at least one water-soluble acid;
(c) providing gaseous carbon dioxide; and
(d) contacting said GNCC or PCC provided in step (a), the at least one acid provided in step (b) and the gaseous carbon dioxide provided in step (c);
   wherein
   (i) the at least one acid provided in step (b) has a pKₐ of greater than 2.5 and less than or equal to 7 at 20 °C, associated with the ionisation of its first available hydrogen, and a corresponding anion is formed on loss of this first available hydrogen capable of forming a water-soluble calcium salt; and
   (ii) following contacting the at least one water-soluble acid provided in step (b) and the GNCC or PCC provided in step (a), at least one water-soluble salt, which in the case of a hydrogen-containing salt has a pKₐ of greater than 7 at 20 °C, associated with the ionisation of the first available hydrogen, and the salt anion of which is capable of forming water-insoluble calcium salts, is additionally provided.

The source of calcium carbonate, e.g., ground natural calcium carbonate (GNCC)/(GCC), preferably is selected from calcium carbonate-containing minerals selected from the group comprising marble, chalk, limestone and mixtures thereof. Natural calcium carbonate may comprise further naturally occurring components such as magnesium carbonate, alumino silicate etc. According to one embodiment, natural calcium carbonate comprises aragonitic, vateritic or calcitic mineralogical crystal forms of calcium carbonate or mixtures thereof.

In general, the grinding of natural calcium carbonate may be performed in a dry or wet grinding process and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulverizer, a shredder, a de-clumper, a knife cutter, or other such equipment known to the skilled person. In case the ground natural calcium carbonate comprises wet ground calcium carbonate, the grinding step may be performed under conditions such that autogenous grinding takes place and/or by horizontal ball milling, and/or other such processes known to the skilled person. The wet processed ground natural calcium carbonate thus obtained may be washed and dewatered by well-known processes, e.g., by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

As already indicated hereinabove, a precipitated calcium carbonate (PCC) in the meaning of the present invention is a synthesized material, generally obtained by precipitation following a reaction of carbon dioxide and calcium hydroxide in an aqueous environment or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained aqueous PCC slurry can be mechanically dewatered and dried.

According to one embodiment of the present invention, the precipitated calcium carbonate comprises aragonitic, vateritic or calcitic mineralogical crystal forms of calcium carbonate or mixtures thereof.

Precipitated calcium carbonate may be ground prior to the treatment with carbon dioxide and at least one H₃O⁺ ion donor by the same means as used for grinding natural calcium carbonate and described above.

The natural or precipitated calcium carbonate may be used dry or suspended in water. Preferably, a corresponding aqueous slurry has a content of natural or precipitated calcium carbonate within the range of from 1 to 90 wt.%, more preferably from 3 to 60 wt.%, even more preferably from 5 to 40 wt.%, and most preferably from 10 to 25 wt.%, based on the total weight of said slurry.

The one or more H₃O⁺ ion donor used for the preparation of surface-reacted calcium carbonate may be any strong acid, medium-strong acid, or weak acid, or mixtures thereof, generating H₃O⁺ ions under the preparation conditions. The at least one H₃O⁺ ion donor can also be an acid salt, generating H₃O⁺ ions under the preparation conditions.

According to one embodiment, the at least one H₃O⁺ ion donor is a strong acid having a pKₐ of 0 or less at 20 °C.

According to another embodiment, the at least one H₃O⁺ ion donor is a medium-strong acid having a pKₐ value from 0 to 2.5 at 20 °C. If the pKₐ at 20 °C is 0 or less, the acid is preferably selected from sulphuric acid, hydrochloric acid, or mixtures thereof. If the pKₐ at 20 °C is from 0 to 2.5, the H₃O⁺ ion donor is preferably selected from H₂SO₃, H₃PO₄, oxalic acid, or mixtures thereof. The at least one H₃O⁺ ion donor can also be an acid salt, for example, HSO₄⁻ or H₂PO₄⁻, being at least partially neutralized by a corresponding cation such as Li⁺, Na⁺ or K⁺, or HPO₄²⁻, being at least partially neutralized by a corresponding cation such as Li⁺, Na⁺_{'} K⁺, Mg²⁺ or Ca²⁺. The at least one H₃O⁺ ion donor can also be a mixture of one or more acids and one or more acid salts.

According to still another embodiment, the at least one H₃O⁺ ion donor is a weak acid having a pKₐ value of greater than 2.5 and less than or equal to 7, when measured at 20 °C, associated with the ionisation of the first available hydrogen, and having a corresponding anion, which is capable of forming water-soluble calcium salts. Subsequently, at least one water-soluble salt, which in the case of a hydrogen-containing salt has a pKₐ of greater than 7, when measured at 20 °C, associated with the ionisation of the first available hydrogen, and the salt anion of which is capable of forming water-insoluble calcium salts, is additionally provided. According to a more preferred embodiment, the weak acid has a pKₐ value from greater than 2.5 to 5 at 20 °C, and more preferably the weak acid is selected from the group consisting of acetic acid, formic acid, propanoic acid and mixtures thereof. Exemplary cations of said water-soluble salt are selected from the group consisting of potassium, sodium, lithium and mixtures thereof. In a more preferred embodiment, said cation is sodium or potassium. Exemplary anions of said water-soluble salt are selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of dropwise addition, this addition preferably takes place within a time period of 10 min. It is more preferred to add said salt in one step.

According to one embodiment of the present invention, the at least one H₃O⁺ ion donor is selected from the group consisting of hydrochloric acid, sulphuric acid, sulphurous acid, phosphoric acid, citric acid, oxalic acid, acetic acid, formic acid and mixtures thereof. Preferably the at least one H₃O⁺ ion donor is selected from the group consisting of hydrochloric acid, sulphuric acid, sulphurous acid, phosphoric acid, oxalic acid, H₂PO₄⁻, being at least partially neutralized by a corresponding cation such as Li⁺, Na⁺ or K⁺, HPO₄²⁻, being at least partially neutralized by a corresponding cation such as Li⁺, Na⁺, K⁺, Mg²⁺ or Ca²⁺ and mixtures thereof, more preferably the at least one acid is selected from the group consisting of hydrochloric acid, sulphuric acid, sulphurous acid, phosphoric acid, oxalic acid, or mixtures thereof. A particularly preferred H₃O⁺ ion donor is phosphoric acid.

The one or more H₃O⁺ ion donor can be added to the suspension as a concentrated solution or a more diluted solution. Preferably, the molar ratio of the H₃O⁺ ion donor to the natural or precipitated calcium carbonate is from 0.01:1 to 4:1, more preferably from 0.02:1 to 2:1, even more preferably from 0.05:1 to 1:1 and most preferably from 0.1:1 to 0.58:1.

In another preferred embodiment, the at least one H₃O⁺ ion donor is selected from the group consisting of hydrochloric acid, sulphuric acid, sulphurous acid, phosphoric acid, citric acid, oxalic acid, acetic acid, formic acid and mixtures thereof, wherein the molar ratio of the H₃O⁺ ion donor to the natural or precipitated calcium carbonate is from 0.01:1 to 4:1, more preferably from 0.02:1 to 2:1, even more preferably from 0.05:1 to 1:1 and most preferably from 0.1:1 to 0.58:1.

In a particularly preferred embodiment, the at least one H₃O⁺ ion donor is a mixture of phosphoric acid and citric acid, more preferably the molar ratio of the H₃O⁺ ion donor to the natural or precipitated calcium carbonate is from 0.01:1 to 4:1, more preferably from 0.02:1 to 2:1, even more preferably from 0.05:1 to 1:1 and most preferably from 0.1:1 to 0.58:1. In this embodiment, phosphoric acid is preferably used in excess relative to citric acid.

As an alternative, it is also possible to add the H₃O⁺ ion donor to the water before the natural or precipitated calcium carbonate is suspended.

In a next step, the natural or precipitated calcium carbonate is treated with carbon dioxide. If a strong acid such as sulphuric acid or hydrochloric acid is used for the H₃O⁺ ion donor treatment of the natural or precipitated calcium carbonate, the carbon dioxide is automatically formed. Alternatively or additionally, the carbon dioxide can be supplied from an external source.

H₃O⁺ ion donor treatment and treatment with carbon dioxide can be carried out simultaneously, which is the case when a strong or medium-strong acid is used. It is also possible to carry out H₃O⁺ ion donor treatment first, e.g., with a medium strong acid having a pKₐ in the range of 0 to 2.5 at 20 °C, wherein carbon dioxide is formed in situ, and thus, the carbon dioxide treatment will automatically be carried out simultaneously with the H₃O⁺ ion donor treatment, followed by the additional treatment with carbon dioxide supplied from an external source.

Preferably, the concentration of gaseous carbon dioxide in the suspension is, in terms of volume, such that the ratio (volume of suspension): (volume of gaseous carbon dioxide) is from 1:0.05 to 1:20, even more preferably 1:0.05 to 1:5.

In a preferred embodiment, the H₃O⁺ ion donor treatment step and/or the carbon dioxide treatment step are repeated at least once, more preferably several times. According to one embodiment, the at least one H₃O⁺ ion donor is added over a time period of at least about 5 min, preferably at least about 10 min, typically from about 10 to about 20 min, more preferably about 30 min, even more preferably about 45 min, and sometimes about 1 h or more.

Subsequent to the H₃O⁺ ion donor treatment and carbon dioxide treatment, the pH of the aqueous suspension, measured at 20 °C, naturally reaches a value of greater than 6.0, preferably greater than 6.5, more preferably greater than 7.0, even more preferably greater than 7.5, thereby preparing the surface-reacted natural or precipitated calcium carbonate as an aqueous suspension having a pH of greater than 6.0, preferably greater than 6.5, more preferably greater than 7.0, even more preferably greater than 7.5.

Similarly, surface-reacted precipitated calcium carbonate may be obtained. As can be taken in detail from WO 2009/074492 A1, surface-reacted precipitated calcium carbonate is obtained by contacting precipitated calcium carbonate with H₃O⁺ ions and with anions being solubilized in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilized calcium ions correspond to an excess of solubilized calcium ions relative to the solubilized calcium ions naturally generated on dissolution of precipitated calcium carbonate by H₃O⁺ ions, where said H₃O⁺ ions are provided solely in the form of a counter ion to the anion, i.e. via the addition of the anion in the form of an acid or non-calcium acid salt, and in absence of any further calcium ion or calcium ion generating source.

Said excess solubilized calcium ions are preferably provided by the addition of a soluble neutral or acid calcium salt, or by the addition of an acid or a neutral or acid non-calcium salt which generates a soluble neutral or acid calcium salt in situ.

Said H₃O⁺ ions may be provided by the addition of an acid or an acid salt of said anion, or the addition of an acid or an acid salt which simultaneously serves to provide all or part of said excess solubilized calcium ions.

In a further preferred embodiment of the preparation of the surface-reacted natural or precipitated calcium carbonate, the natural or precipitated calcium carbonate is reacted with the acid and/or the carbon dioxide in the presence of at least one compound selected from the group consisting of silicate, silica, aluminium hydroxide, earth alkali aluminate such as sodium or potassium aluminate, magnesium oxide, aluminium sulphate or mixtures thereof. Preferably, the at least one silicate is selected from an aluminium silicate, a calcium silicate, or an earth alkali metal silicate.

In another preferred embodiment, said at least one compound is aluminium sulphate hexadecahydrate. In a particularly preferred embodiment, said at least one compound is aluminium sulphate hexadecahydrate, wherein the at least one H₃O⁺ ion donor is selected from the group consisting of hydrochloric acid, sulphuric acid, sulphurous acid, phosphoric acid, citric acid, oxalic acid, acetic acid, formic acid and mixtures thereof, more preferably the molar ratio of said H₃O⁺ ion donor to the natural or precipitated calcium carbonate is from 0.01:1 to 4:1, more preferably from 0.02:1 to 2:1, even more preferably from 0.05:1 to 1:1 and most preferably from 0.1:1 to 0.58:1.

The foregoing components can be added to an aqueous suspension comprising the natural or precipitated calcium carbonate before adding the acid and/or carbon dioxide.

Alternatively, the foregoing components can be added to the aqueous suspension of natural or precipitated calcium carbonate while the reaction of natural or precipitated calcium carbonate with an acid and carbon dioxide has already started. Further details about the preparation of the surface-reacted natural or precipitated calcium carbonate in the presence of at least one silicate and/or silica and/or aluminium hydroxide and/or earth alkali aluminate component(s) are disclosed in WO 2004/083316 A1, the content of this reference herewith being included in the present document.

The surface-reacted calcium carbonate can be kept in suspension, optionally further stabilized by a dispersant. Conventional dispersants known to the skilled person can be used. A preferred dispersant is comprised of polyacrylic acids and/or carboxymethylcelluloses.

Alternatively, the aqueous suspension described above can be dried, thereby obtaining the solid (i.e. dry or containing as little water that it is not in a fluid form) surface-reacted natural or precipitated calcium carbonate in the form of granules or a powder.

The surface-reacted calcium carbonate may have different particle shapes, such as e.g., the shape of roses, golf balls and/or brains.

According to the present invention, the surface-reacted calcium carbonate particles may have a volume median grain diameter *d*₅₀(vol) of from 1 to 75 µm, preferably from 2 to 50 µm, more preferably from 3 to 40 µm, even more preferably from 4 to 30 µm, and most preferably from 5 to 15 µm. According to another preferred embodiment, the surface-reacted calcium carbonate particles have a volume median grain diameter *d*₅₀(vol) of from 1.5 to 12 µm, preferably from 2 to 5 µm or from 6 to 10 µm.

It may furthermore be preferred that the surface-reacted calcium carbonate particles have a grain diameter *d*₉₈(vol) of from 2 to 150 µm, preferably from 4 to 100 µm, more preferably from 6 to 80 µm, even more preferably from 8 to 60 µm, and most preferably from 10 to 30 µm. According to another preferred embodiment, the surface-reacted calcium carbonate particles have a volume median grain diameter *d*₉₈(vol) of from 5 to 20 µm, preferably from 8 to 12 µm or from 13 to 18 µm.

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 µm (∼ nm). The equilibration time used at each pressure step is 20 seconds. The sample material is sealed in a 5 cm³ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p.1753-1764).

The total pore volume seen in the cumulative intrusion data can be separated into two regions with the intrusion data from 214 µm down to about 1 - 4 µm showing the coarse packing of the sample between any agglomerate structures contributing strongly. Below these diameters lies the fine interparticle packing of the particles themselves. If they also have intraparticle pores, then this region appears bi modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including poreshielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Preferably, the surface-reacted calcium carbonate has an intra-particle intruded specific pore volume in the range from 0.1 to 2.15 cm³/g, more preferably from 0.2 to 1.95 cm³/g, especially preferably from 0.4 to 1.75 cm3/g and most preferably from 0.6 to 1.65 cm³/g, calculated from mercury porosimetry measurement.

The intra-particle pore size of the surface-reacted calcium carbonate preferably is in a range of from 0.004 to 1.2 µm, more preferably in a range of from 0.004 to 0.9 µm, especially preferably from 0.004 to 0.8 µm and most preferably of 0.004 to 0.7 µm, e.g. 0.004 to 0.6 µm determined by mercury porosimetry measurement.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1, the content of these references herewith being included in the present document.

The aforementioned particulate mineral materials according to the present invention are functionalized with one or more scavenging agents. Said functionalization, i.e. the immobilization of the one or more scavenging agents on the particulate mineral material can be achieved by different preparation methods. It is especially preferred to dissolve the one or more scavenging agents in a suitable solvent and to bring the resulting dissolution into contact with the particulate mineral material. The mineral material preferably may be in dry from (dry impregnation) prior to the application of the solution with the scavenging agent. The resulting material is preferably dried after said impregnating step. The inventors of the present invention surprisingly found out that the selection of the solvent has an influence on the efficacy of the functionalized particulate mineral material. More precisely, the resulting functionalized particulate mineral material shows better or worse scavenging (and removal) properties depending on the selection of the solvent used. According to the present invention, it is especially preferred to use organic solvents and more preferably an alcohol, like methanol or ethanol or mixtures of the foregoing for dissolving the one or more scavenging agents and applying them to the particulate mineral material.

According to the present invention, the functionalized particulate mineral material comprises the at least one scavenging agent, preferably in an amount of 0.05 to 10 wt.-%, based on the dry weight of the particulate mineral material, preferably in an amount of 0.1 to 5 wt.-% and more preferably 0.5 to 2.5 wt.-%.

The scavenging agents being suitable according to the present invention in any case have a thiol group, i.e. a -SH-functionality. Said thiol-group is capable of scavenging, i.e. bonding or complexing the metal ions selected from the group consisting of Pb, Zn, Mn, Cd, Cr, Hg, Cu, Co, Mo and Ni in the aqueous medium. The particulate mineral material being functionalized with the one or more scavenging agents and comprising the bonded or complexed cationic metal ions can be removed from the aqueous medium by techniques well known to the skilled person. These techniques include filtration, sedimentation, sieving and centrifugation. It is preferred to use filtration or centrifugation techniques.

According to an especially preferred embodiment of the present invention, the scavenging agent beside the thiol-group also contains an anchor-group, which is able to bind to the surface of the particulate mineral material. The corresponding binding preferably is ionic or covalent and most preferably is covalent. Suitable anchor groups include anchor group selected from a carboxylic group, a carbonate group, a phosphate-group, a hydrogen-phosphate group and an organosilane-group. Suitable scavenging agents with a carboxylic group or carbonate group as anchor group include compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3 -mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.

The compounds which comprise a carboxylic acid group or the corresponding carbonate salt and linked to one or several thiol groups via a linear or branched alkane-group or alkane-chain may e.g. comprise a C2 or C3 or C4 chain containing no substituent or being substituted with e.g. a further functional group. In some embodiments, the alkane group may thus be functionalized with further functional groups, including OH-groups. Preferably, the linear or branched alkane group comprises four or less carbon atoms, more preferably three or less carbon atoms. Most preferred embodiments of the scavenging agents with a carboxylic group or carbonate group as anchor group are selected from thioglycolic acid, thiolactic acid and 3-mercaptopropionic acid. Suitable scavenging agents which comprise an organosilane-group as anchor group include compounds which comprise an organosilane anchor group linked to one or several thiol groups via a linear or branched alkane group or alkane chain may e.g. comprise a C2 or C3 or C4 chain containing no substituent or being substituted with e.g. a further functional group. Preferably, the linear or branched alkane group comprises four or less carbon atoms, more preferably three or less carbon atoms. Most preferred embodiments of the scavenging agents with an organosilane-group as anchor group are selected from (3-mercaptopropyl)-trimethoxysilane, (3 -mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane. According to the present invention, it is also explicitly contemplated to use mixtures of two or more of the inventive scavenging agents. Thioglycolic acid, (3-mercaptopropyl)trimethoxysilane and/or (3-mercaptopropyl)triethoxysilane are especially preferred scavenging agents according to the present invention and also can be used as mixtures. For example, a 1:1 (w/w) mixture of thioglycolic acid and (3-mercaptopropyl)trimethoxysilane or (3-mercaptopropyl)triethoxysilane may be used.

The contacting of the functionalized particulate mineral material with the aqueous medium containing cationic metal ions selected from the group consisting of Pb, Zn, Mn, Cd, Cr, Hg, Cu, Co, Mo and Ni according to the present invention can be carried out by adding a suitable amount of said functionalized particulate mineral. A suitable amount in this context is an amount, which is sufficiently high in order to achieve the desired grade of scavenging and removal of said heavy metal ions. Such suitable amount obviously depends on the concentration of the metal in the aqueous medium as well as on the amount of aqueous medium to be treated. Generally speaking, it is preferred to add 0.01 to 3 wt.-%, preferably 0.1 to 1.0 wt.-% of functionalized particulate mineral material (dry weight) to an aqueous medium containing one or more cationic metal ions selected from the group consisting of Pb, Zn, Mn, Cd, Cr, Hg, Cu, Co, Mo and Ni in an overall amount of 0. 1 to 200 ppm. However, it is to be noted that also higher concentrations of cationic metal ions selected from the group consisting of Pb, Zn, Mn, Cd, Cr, Hg, Cu, Co, Mo and Ni can be scavenged and removed with the functionalized particulate mineral material according to the present invention or the inventive process. In such case, higher amounts of functionalized mineral material may be applied. According to a preferred embodiment of the invention, Cd or Cd²⁺-ions are scavenged and removed from an aqueous medium by the inventive use or process or by use of the inventive functionalized mineral material.

The aqueous medium according to the present invention preferably is selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents of the aforementioned dewatered sludges. However, it is to be understood that according to the present invention any aqueous medium containing one or more cationic metal ions selected from the group consisting of Pb, Zn, Mn, Cd, Cr, Hg, Cu, Co, Mo and Ni can be effectively treated with the inventive process and inventive functionalized particulate mineral material.

The treatment or contacting with the functionalized particulate mineral material may be carried out at any temperature. However, it is especially preferred to treat the aqueous medium at a temperature in the range of 15 to 40°C and preferably at a temperature of 18 to 25°C. Furthermore, it is preferred according to the present invention to adjust the aqueous medium prior to treatment with the functionalized particulate mineral material to a pH-value of 5 to 10, preferably 6 to 9 and more preferably to 7 to 8.

The functionalized particulate mineral material, e.g. the functionalized hydromagnesite, the functionalized GCC, the functionalized PCC and or the functionalized SRCC being the subject matter of the present invention can be in solid form, e.g. in the form of powder or granules or can be in the form of a slurry prior to its use in the inventive process or for the inventive purpose. Preferably, the functionalized particular material is stored and/or used in dry form.

The scope and interest of the invention will be better understood based on the following examples which are intended to illustrate certain embodiments of the present invention and are non-limitative.

### Examples

### 1. Measuring methods

In the following, measuring methods implemented in the examples are described. Reference is also made to the methods already described above.

Any pH value is measured at 25 °C using a Mettler-Toledo Seven Easy pH meter and a Mettler-Toledo InLab Expert Pro pH electrode. A three point calibration (according to the segment method) of the instrument is first made using commercially available buffer solutions having pH values of 4, 7 and 10 at 25 °C (from Aldrich). The reported pH values are the endpoint values detected by the instrument (signal differs by less than 0.1 mV from the average over the last 6 seconds).

The Cd-content or concentration was determined by using ICP-MS (Inductively Coupled Plasma - Mass Spectrometry). The samples were measured with a NexION 350D ICP-MS system from Perkin Elmer in KED mode (Kinetic Energy Discrimination) on ¹¹¹Cd and ¹¹³Cd. The calibration was conducted using standard reference material (Instrument Calibration Standard 2). The samples were diluted directly with the prepFAST system prior to analysis wherever possible. Samples which had to be diluted prior to this step were diluted with HNO₃ 1% (e.g. 1 ml sample + 9 ml acidified H2O). Standard additions were conducted as follows: 10 µl standard / 10 ml measuring solution.

The specific surface area (in m²/g) was determined by using the BET method (using nitrogen as adsorbing gas) in accordance with ISO 9277:2010. The total surface area (in m²) of the filler material was then obtained by multiplication of the specific surface area and the mass (in g) of the corresponding sample.

### 2. Manufacture of the SRCC-materials

A surface-reacted calcium carbonate material was prepared as described in the following:
Surface reacted calcium carbonate (SRCC) was obtained by preparing 10 liters of an aqueous suspension of ground calcium carbonate in a mixing vessel by adjusting the solids content of a ground limestone calcium carbonate from Blaubeuren, Germany having a particle size distribution of 90% less than 2 µm, as determined by sedimentation, such that a solids content of 15 wt%, based on the total weight of the aqueous suspension, is obtained. In addition, concentrated phosphoric acid was diluted in water to prepare a 30 wt% phosphoric acid solution. Whilst mixing the slurry, 2.8 kg of the phosphoric acid solution was added to said suspension over a period of 10 minutes at a temperature of 70°C. Finally, after the addition of the phosphoric acid, the slurry was stirred for additional 5 minutes, before removing it from the vessel and drying. The specific surface area of the SRCC was determined to be 92 m²/g.

### 3. Manufacture of the functionalized mineral materials

Functionalized SRCC-based materials were prepared as described in the following:
5 g of the above obtained SRCC was dried at 100°C overnight. MPTMS ((3-Mercaptopropyl)trimethoxysilane, 95wt%) and TGA (Thioglycolic acid, 98wt%) and mixtures of the foregoing were used as scavenging agents for functionalizing the dried SRCC. The respective amount of scavenging agent was dissolved in either ethanol (EtOH) or water. The corresponding solutions were added dropwise on the SRCC material (dry impregnation). After that, the obtained material was dried at 100°C under vacuum (50mbar) for 3-4 hours. Finally, a manual de-agglomeration step was applied.

The amounts of the respective scavenging agent, the type of scavenging agent as well as the amount of particulate mineral material and solvent is given in table 1 below.

**Table 1**

| No | Mineral | Weight Mineral [g] | Scaveng. agent | Weight Scaveng. Agent [wt.-%] | Amount in Scaveng. Agent [g] | Solvent | Amount Solvent [g] |
|---|---|---|---|---|---|---|---|
| 1 | SRCC | 5 | MPTMS | 0.5 | 0.025 | EtOH | 17 |
| 2 | SRCC | 5 | MPTMS | 1 | 0.05 | EtOH | 17 |
| 3 | SRCC | 5 | MPTMS | 5 | 0.25 | EtOH | 17 |
| 4 | SRCC | 5 | MPTMS | 5 | 0.25 | H₂O | 10 |
| 5 | SRCC | 5 | TGA | 0.5 | 0.034 (0.025) | EtOH | 17 |
| 6 | SRCC | 5 | TGA | 1 | 0.064 (0.05) | EtOH | 17 |
| 7 | SRCC | 5 | TGA | 5 | 0.25 | EtOH | 17 |
| 8 | SRCC | 5 | TGA | 5 | 0.25 | H₂O | 10 |
| 9 | SRCC | 5 | MPTMS/ TGA | 2.5/2.5 | 0.125/0.125 | EtOH | 17 |

### 4. Scavenging and Removal-Tests

In order to investigate the scavenging and removal capabilities and especially the efficiency of the inventive materials and processes for removing heavy metal ions, the functionalized SRCC-based materials described above were tested in relation to an aqueous medium containing cadmium(II)nitrate.

### Test Solution

A Cd²⁺-containing stock solution (15 ppm) was prepared by dilution of a commercial 1000 ppm standard (Sigma Aldrich, 36379-100ML-F) with Milli-Q filtered, deionized water.

### Treatment procedure (contacting and removal)

For each experiment, 95 g of this stock solution was transferred into a glass flask and 100 mg of the respective mineral material was added at room temperature. The solids were suspended by using magnetic stirring bars (800 rpm, 1 hour). The suspensions were left for settling (10 min), the turbid supernatant (50 mL) transferred into centrifugation tubes, centrifuged (4500 rpm, 4 min) and the now clear supernatant filtered through a syringe filter (Chromafil Xtra, RC-20/25 0.2µm). To these solutions (ca. 30 g), nitric acid (0.5 mL, 37%, SigmaAldrich) was added to prevent the precipitation of any material before analysis. A blank experiment (#1) was conducted and the resulting concentration was taken as reference. Statements regarding the Cd removal are made with respect to the concentration of this reference sample. The Cd-content or concentration was determined as explained above by using ICP-MS (Inductively Coupled Plasma - Mass Spectrometry). Furthermore, the SRCC material was tested without functionalization (experiment #2).

In the first set of experiments (#6-9) SRCC functionalized with MPTMS as scavenging agent was tested (materials No. 1-4 in table 1). In the second set of experiments (#10-13) SRCC functionalized with TGA (thioglycolic acid) was tested (materials No. 5-8 in table 1). In experiment #14 a 1:1 (w/w) mixture of TGA and MPTMS was tested (material No. 9 in table 1).

The corresponding results of the scavenging and removal test are reported in Table 2.

**Table 2**

| # | Mineral material | No. | Weight Scaveng. Agent [wt.-%] | Final concentration cadmium [mg/l] | Removal cadmium [%] |
|---|---|---|---|---|---|
| #1 | Reference | - | - | 15 | 0 |
| #2 | SRCC (no func.) | - | - | 4 | 73 |
| #6 | SRCC/MPTMS | 1 | 0.5 | 0.81 | 94.6 |
| #7 | SRCC/MPTMS | 2 | 1 | 0.84 | 94.4 |
| #8 | SRCC/MPTMS | 3 | 5 | 0.24 | 98.4 |
| #9 | SRCC/MPTMS | 4 | 5 | 1.638 | 89 |
| #10 | SRCC/TGA | 5 | 0.5 | 1.1 | 92.9 |
| #11 | SRCC/TGA | 6 | 1 | 0.47 | 96.8 |
| #12 | SRCC/TGA | 7 | 5 | 0.61 | 95.9 |
| #13 | SRCC/TGA | 8 | 5 | 4 | 73 |
| #14 | SRCC/MPTMS+TGA | 9 | 2.5+2.5 | 0.43 | 97.1 |

### 5. Results

As can be gathered from table 2, the functionalization of the mineral material with one or more scavenging agents containing a thiol-group significantly improved the Cd removal efficiency over a corresponding SRCC material without functionalization. Already small amounts of 0.5 wt.% of the scavenging agent led to excellent performance, which is much better than that of the SRCC without functionalization. The same holds true for the mixture of MPTMS and TGA. As can be gathered from #9 and #13, the use of water as the solvent for the functionalization step (impregnation) of the mineral material results in a reduced efficiency or removal performance in comparison to the materials being obtained by the use of alcohol-based solutions.

## Claims

1. Use of a particulate mineral material being functionalized with one or more scavenging agents comprising a thiol-group and having a specific surface area prior to functionalization with said one or more scavenging agents of 10 to 200 m²/g for scavenging and removing cationic metal ions from an aqueous medium, wherein the particulate mineral material is selected from the group consisting of hydromagnesite, calcium carbonate containing material, brucite, magnesite, dolomite and mixtures of the foregoing and wherein the metal is selected from the group consisting of Pb, Zn, Mn, Cd, Cr, Hg, Cu, Co, Mo and Ni and preferably is Cd.

2. Use according to claim 1, wherein the one or more scavenging agents comprising a thiol-group additionally comprise an anchor group, preferably an anchor group selected from a carboxylic group, a carbonate group, a phosphate-group, a hydrogen-phosphate group and an organosilane-group, wherein the one or more scavenging agents more preferably are selected from compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3-mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.

3. Use according to claim 1 or 2, wherein the aqueous medium is selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents of the aforementioned dewatered sludges.

4. Use according to any of the preceding claims, wherein the functionalized particulate mineral material comprises the scavenging agent in an amount of 0.05 to 10 wt.-%, based on the dry weight of the particulate mineral material, preferably 0.1 to 5 wt.-% and more preferably 0.5 to 2.5 wt.-%.

5. Use according to any of the preceding claims, wherein the particulate mineral material is selected from hydromagnesite and calcium carbonate containing particulate material and mixtures of the foregoing, preferably from surface-reacted calcium carbonate (SRCC) and hydromagnesite and mixtures of the foregoing, and more preferably is surface-reacted calcium carbonate (SRCC).

6. Use according to any of the preceding claims, wherein the specific surface area of the particulate mineral material prior to functionalization with said one or more scavenging agents is more than 40 m²/g, preferably more than 50 m²/g and most preferably more than 60 m²/g.

7. Use according to any of claims 2 to 7, wherein the functionalization is achieved by immobilization of the one or more scavenging agents comprising a thiol-group through a bonding to the surface of the particulate mineral material via the anchor group.

8. Process for scavenging and removing cationic metal ions from an aqueous medium comprising the steps:
a) Providing an aqueous medium containing one or more cationic metal ions selected from the group consisting of Pb, Zn, Mn, Cd, Cr, Hg, Cu, Co, Mo and Ni;
b) Functionalizing a particulate mineral material having a specific surface area of 10 to 200 m²/g with one or more scavenging agents comprising a thiol-group, wherein the particulate mineral material is selected from the group consisting of hydromagnesite, calcium carbonate containing material, brucite, magnesite, dolomite and mixtures of the foregoing;
c) Adding the functionalized particulate mineral material of step b) to the aqueous medium for scavenging one or more of the cationic metal ions selected from the group consisting of Pb, Zn, Mn, Cd, Cr, Hg, Cu, Co, Mo and Ni;
d) Removing the functionalized particulate mineral material from the aqueous medium after step c).

9. Process according to claim 8, wherein the pH-value of the aqueous medium is adjusted prior to the addition of the functionalized particulate mineral material to a value of 5 to 10, preferably, 6 to 9 and more preferably to 7 to 8.

10. Process according to claims 8 or 9, wherein during step c) one or more of the cationic metal ions selected from the group consisting of Pb, Zn, Mn, Cd, Cr, Hg, Cu, Co, Mo and Ni are bound to the thiol group of the scavenging agent.

11. Process according to any of claims 8 to 10, wherein the specific surface area of the particulate mineral material to be functionalized according to step b) with said one or more scavenging agents is more than 40 m²/g, preferably more than 50 m²/g and most preferably more than 60 m²/g.

12. Process according to any of claims 8 to 11, wherein the one or more scavenging agents comprising a thiol-group additionally comprise an anchor group, preferably an anchor group selected from a carboxylic group, a carbonate group, a phosphate-group, a hydrogen-phosphate group and an organosilane-group, wherein the one or more scavenging agents more preferably are selected from compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3 -mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.

13. Process according to any of claims 8 to 12, wherein functionalization in step b) is achieved by contacting the particulate mineral material with the dissolved scavenging agent, wherein the solvent preferably is an organic solvent and more preferably is an alcohol.

14. Process according to any of claims 8 to 13, wherein the particulate mineral material is selected from hydromagnesite and calcium carbonate containing particulate material and mixtures of the foregoing, preferably from surface-reacted calcium carbonate (SRCC) and hydromagnesite and mixtures of the foregoing, and more preferably is surface-reacted calcium carbonate (SRCC).

15. A functionalized particulate mineral material comprising at least one scavenging agent having a thiol-group and an anchor group, wherein the at least one scavenging agent covers at least partially the surface of the particulate mineral material and wherein the at least one scavenging agent is bound to the surface of the particulate mineral material via the anchor group, the anchor group being selected from a carboxylic group, a carbonate group, a phosphate-group, a hydrogen-phosphate group and an organosilane-group, and wherein the particulate mineral material has a specific surface area prior to functionalization with said at least one scavenging agent of 10 to 200 m²/g and is selected from the group consisting of hydromagnesite, calcium carbonate containing material, brucite, magnesite, dolomite and mixtures of the foregoing.

16. Functionalized particulate mineral material according to claim 15, wherein the particulate mineral material is selected from hydromagnesite and calcium carbonate containing particulate material and mixtures of the foregoing, preferably from surface-reacted calcium carbonate (SRCC) and hydromagnesite and mixtures of the foregoing, and more preferably is surface-reacted calcium carbonate (SRCC).

17. Functionalized particulate mineral material according to claim 15 or 16, wherein the specific surface area of the particulate mineral material to be functionalized according to step b) with said at least one scavenging agent is more than 40 m²/g, preferably more than 50 m²/g and most preferably more than 60 m²/g.

18. Functionalized particulate mineral material according to any of claims 15 to 17, wherein the functionalized particulate mineral material comprises the scavenging agent in an amount of 0.05 to 10 wt.-%, based on the dry weight of the particulate mineral material, preferably 0.1 to 5 wt.-% and more preferably 0.5 to 2.5 wt.-%.

19. Functionalized particulate mineral material according to any of claims 15 to 18, wherein said at least one scavenging agent is selected from compounds which comprise a carboxylic acid group or the corresponding carbonate group linked to one or several thiol groups via a linear or branched, optionally substituted alkane-group with preferably 1 to 4 carbon atoms including, for example, thioglycolic acid, thiolactic acid and 3-mercaptopropionic acid or are selected from compounds, which comprise an organosilane anchor group linked to one or several thiol groups via a linear or branched, optionally substituted alkane-group with preferably 1 to 4 carbon atoms, including, for example, (3-mercaptopropyl)-trimethoxysilane, (3-mercaptopropyl)-triethoxysilane, (2-mercaptoethyl)-trimethoxysilane, (2-mercaptoethyl)-triethoxysilane, (mercaptomethyl)-trimethoxysilane and (mercaptomethyl)-triethoxysilane or mixtures of the foregoing scavenging agents.
